# EUROPÄISCHE PATENTSCHRIFT

(11) **EP 3 108 482 B1**
(45) Veröffentlichungstag und Bekanntmachung des Hinweises auf die Patenterteilung: **18.12.2019**
(21) Anmeldenummer: 15704248.2
(22) Anmeldetag: 03.02.2015
(51) Int. Cl.: C04B 35/26, C04B 35/44, C04B 35/50, C04B 35/505, C04B 35/01, C04B 35/638, H01C 7/04, H01C 17/07, H01C 1/14

(54) **NTC-BAUELEMENT UND VERFAHREN ZU DESSEN HERSTELLUNG**
NTC COMPONENT AND METHOD FOR THE PRODUCTION THEREOF
ÉLÉMENT CTN ET PROCÉDÉ DE FABRICATION DUDIT ÉLÉMENT CTN

(30) Priorität: 18.02.2014 DE 102014102042
(43) Veröffentlichungstag der Anmeldung: 28.12.2016
(73) Patentinhaber: TDK Electronics AG, 81671 München (DE)
(72) Erfinder: SCHWEINZGER, Manfred, A-8541 Schwanberg (AT)
(74) Vertreter: Epping - Hermann - Fischer
(86) Internationale Anmeldenummer: PCT/EP2015/052177
(87) Internationale Veröffentlichungsnummer: WO 2015/124421

(56) Entgegenhaltungen:
- EP-A1- 2 690 194
- WO-A1-2013/167368
- CN-U- 202 281 620
- DE-A1- 19 942 176
- US-A- 3 392 054
- US-A- 4 008 514
- HUIMIN ZHANG ET AL: "Preparation and characterization of Fe3+-doped Ni0.9Co0.8Mn1.3-xFexO4(0<x<0.7) negative temperature coefficient ceramic materials", MICROELECTRONIC ENGINEERING, ELSEVIER PUBLISHERS BV., AMSTERDAM, NL, Bd. 88, Nr. 9, 6. April 2011 (2011-04-06), Seiten 2934-2940, XP028257644, ISSN: 0167-9317, DOI: 10.1016/J.MEE.2011.04.023 [gefunden am 2011-04-22]
- K Park ET AL: "Effect of Al2O3 Addition on the Microstructure and the Electrical Stability of MnNiCoO4 NTC Thermistors", Journal of the Korean Physical Society, August 2006 (2006-08), Seiten 585-590, XP055182615, Gefunden im Internet: URL:http://www.kps.or.kr/jkps/abstract_vie w.asp?articleuid=867DB24A-70FF-4D08-A5CC-3 E90128605F8&globalmenu=3&localmenu=10 [gefunden am 2015-04-13]
- JADHAV R N ET AL: "Studies on the properties of Ni0.6Cu0.4Mn2O4 NTC ceramic due to Fe doping", CERAMICS INTERNATIONAL, ELSEVIER, AMSTERDAM, NL, Bd. 38, Nr. 6, 7. März 2012 (2012-03-07), Seiten 5181-5188, XP028502466, ISSN: 0272-8842, DOI: 10.1016/J.CERAMINT.2012.03.024 [gefunden am 2012-03-16]
- C Metzmacher ET AL: "Indium-containing ceramics with negative temperature coe?cient characteristics", Journal of the European Ceramic Society, 1. Januar 2000 (2000-01-01), Seiten 997-1002, XP055182585, Gefunden im Internet: URL:http://www.sciencedirect.com/science/a rticle/pii/S0955221999002071/pdfft?md5=f7a 9c4691cb8838a4c55a8295b5535ac&pid=1-s2.0-S 0955221999002071-main.pdf [gefunden am 2015-04-13]
- M.N. MURALIDHARAN ET AL: "Effect of Cu and Fe addition on electrical properties of Ni-Mn-Co-O NTC thermistor compositions", CERAMICS INTERNATIONAL, Bd. 38, Nr. 8, 1. Dezember 2012 (2012-12-01), Seiten 6481-6486, XP055182721, ISSN: 0272-8842, DOI: 10.1016/j.ceramint.2012.05.025

## Beschreibung

Die vorliegende Erfindung betrifft ein NTC-Bauelement und ein Verfahren zu dessen Herstellung.

Huimin, Z. et al.: "Preparation and characterization of Fe30+- doped Ni0,9CO0,8Mn1,3-xFexO4 (0≤x≤0,7) negative temperature coefficient ceramic materials", Microelectronic Engineering Volume 88, Issue 9, September 2011, Pages 2934-2940 offenbart ein NTC-Bauelement umfassend eine erste Elektrode und eine zweite Elektrode aus Silber-Palladium und eine NTC-Komponente, die zwischen der ersten Elektrode und der zweiten Elektrode angeordnet ist, wobei die NTC-Komponente eine Keramik mit der allgemeinen Zusammensetzung Ni_{0.9}Co_{0.8}Mn_{1.3-x}FeₓO₄ aufweist und wobei 0 ≤ x ≤ 0.7.

Park, K. et al.: "Effect of Al2O3 Addition on the Microstructure and the Electrical Stability of MnNiCoO4 NTC Thermistors", Journal of the Korean Physical Society, (2006-08), pages 585 - 590 offenbart ein NTC-Bauelement umfassend eine erste Elektrode und eine zweite Elektrode aus Silber, jeweils mit einer Schichtdicke von ca. 15 µm, und eine NTC-Komponente, die zwischen der ersten Elektrode und der zweiten Elektrode angeordnet ist, wobei die NTC-Komponente eine Keramik mit der allgemeinen Zusammensetzung MnNiCo₁₋ₓAlₓO₄ aufweist und wobei 0 ≤ x ≤ 0.20.

Jadhav, R. N. et al.: "Studies on the properties of Ni0,6Cu0,4Mn2O4 NTC ceramic due to Fe doping", CERAMICS INTERNATIONAL, ELSEVIER, AMSTERDAM, NL, vol. 38, no. 6, pages 5181 - 5188 offenbart ein NTC-Bauelement umfassend eine erste Elektrode und eine zweite Elektrode aus Silber, jeweils mit einer Schichtdicke von ca. 15 µm, und eine NTC-Komponente, die zwischen der ersten Elektrode und der zweiten Elektrode angeordnet ist, wobei die NTC-Komponente eine Keramik mit der allgemeinen Zusammensetzung Ni_{0.6}Co_{0.4}Mn_{2-y}Fe_{y}O₄ aufweist und wobei 0.1 ≤ y ≤ 0.5.

Metzmacher, C. et al.: "Indium-containing ceramics with negative temperature coefficient characteristics", Journal of the European Ceramic Society, (2000-01-01), pages 997 - 1002 offenbart ein NTC-Bauelement umfassend eine erste Elektrode und eine zweite Elektrode, jeweils durch PVD-Verfahren aufgebracht, und eine NTC-Komponente, die zwischen der ersten Elektrode und der zweiten Elektrode angeordnet ist, wobei die NTC-Komponente eine Keramik mit der allgemeinen Zusammensetzung Mn_{3-y-x}InₓNi_{y}O₄ aufweist, wobei 0 ≤ x ≤ 1.5 und 0.30 ≤ y ≤ 0.60.

Muralidharan, M. N. et al.: "Effect of Cu and Fe addition on electrical properties on Ni-Mn-Co-O NTC thermistor compositions", CERAMICS INTERNATIONAL, (2012-12-01), vol. 38, no. 8, pages 6481 - 6486 offenbart ein NTC-Bauelement umfassend eine erste Elektrode und eine zweite Elektrode aus Silber und eine NTC-Komponente, die zwischen der ersten Elektrode und der zweiten Elektrode angeordnet ist, wobei die NTC-Komponente eine Keramik mit der allgemeinen Zusammensetzung Ni_{0.7}Mn_{1.8-x}Co_{0.5}FeₓO₄ aufweist, wobei 0 ≤ x ≤ 0.7.

DE 19942176 A1 offenbart:
- Ein NTC-Bauelement umfassend eine erste Elektrode und eine zweite Elektrode aus Platin und eine NTC-Komponente, die zwischen der ersten Elektrode und der zweiten Elektrode angeordnet ist, wobei die NTC-Komponente eine Keramik mit der allgemeinen Zusammensetzung FeNi_{0.5}Me_{1.5}O₄ aufweist;
- und ein Verfahren zu dessen Herstellung umfassend die folgenden Schritte:
   - Verbinden durch Foliengießen einer ersten Elektrodengrünschicht, einer Grundmaterialgrünschicht und einer zweiten Elektrodengrünschicht zu einem strukturierten Verbund, wobei das Grundmaterial eine pulvrige Keramik mit der allgemeinen Zusammensetzung FeNi_{0.5}Mn_{1.5}O₄ umfasst, die vor dem Verbinden auf mittlere Partikelgrößen von ca. 1.2 µm im Durchmesser gemahlen wird,
   - Entbindern mit einer Temperatur von 400 °C und
   - Temperaturschritt bei einer Temperatur von 1300 bis 1350 °C, sodass aus dem Grundmaterial eine NTC-Komponente gebildet wird und das Grundmaterial mit der ersten und der zweiten Elektrode versintert wird.

CN 202281620 U offenbart die Kostenvorteile, Kupferelektrode anstatt Silberelektrode in NTC-Bauelementen mit Sintern unter einer Schutzgasatmosphäre zu verwenden.

WO 2013/167368 A1 offenbart vorteilhafte Sinterbedingungen unter einer Schutzgasatmosphäre mit einem Sauerstoffpartialdruck von weniger als 1 µbar und unterhalb des Gleichgewichtspartialdrucks von Cu/Cu₂O.

EP 2690194 A1 offenbart eine Kupferelektrode, die neben Cu ein Glas und Aluminiumoxid
oder Magnesiumoxid umfasst.

US 3,392,054 A offenbart ein Verfahren zur Herstellung eines Kondensator-Bauelements, wobei eine strukturierte keramische Komponente direkt auf eine erste strukturierte mittels Foliengiessen aufgebracht wird, die dann mit einer Elektrodenschicht bedruckt wird. D10 offenbart zudem als Vorteile des Verfahrens die Möglichkeit sehr dünne Kondensatorbauelemente mit hoher Kapazität herzustellen.

Eine zu lösende Aufgabe ist es, ein verbessertes NTC-Bauelement oder NTC-Bauteil anzugeben, insbesondere eines, das kompakt ist und kostengünstig hergestellt werden kann.

Diese Aufgabe wird durch ein NTC-Bauelement nach Anspruch 1 und ein Verfahren nach Anspruch 8 gelöst. Vorteilhafte Ausgestaltungen und Weiterbildungen sind Gegenstand der abhängigen Patentansprüche.

Mit Vorteil kann durch die Wahl der in Anspruch 1 bzw. 8 definierten Materialien das Herstellungsverfahren für das NTC-Bauelement vereinfacht werden. Insbesondere kann durch die genannten Materialien vorteilhafterweise unter bestimmten Umständen eine chemische Reduktion, beispielsweise des Teils B der Zusammensetzung der NTC-Komponente während der Herstellung des NTC-Bauelements eingeschränkt oder verhindert werden. Durch eine solche Reduktion kann eine unerwünschte reduktive Degradierung oder Veränderung der heißleitenden Eigenschaften während der Herstellung auftreten.

Die oben genannten Umstände können eine im Vergleich zu einem konventionellen Herstellungs- oder Sinterverfahren für NTC-Bauelemente erniedrigte Temperatur sein, beispielsweise in Gegenwart einer Schutzgasatmosphäre mit reduziertem Sauerstoffpartialdruck. Weiterhin können durch das vorgestellte NTC-Bauelement im Zusammenhang mit den bereits genannten Vorteilen alternative, vorteilhafte Elektrodenmaterialien, beispielsweise unedle Metalle wie Kupfer, herangezogen und damit das NTC-Bauelement insgesamt kostengünstiger und/oder kompakter hergestellt werden.

In einer Ausgestaltung umfasst die erste Elektrode eine Schicht mit einem unedlen Metall als Hauptbestandteil. Zusätzlich oder alternativ kann die zweite Elektrode eine Schicht mit einem unedlen Metall als Hauptbestandteil umfassen. Durch diese Ausgestaltung können beispielsweise die Herstellungskosten des NTC-Bauelements reduziert werden, da mit Vorteil auf teure Edelmetalle als Elektrodenmaterialien verzichtet werden kann. Weiterhin kann eine Migration von Elektrodenmaterial gegenüber Ag-haltigen Elektroden beispielsweise in feuchter Umgebung und insbesondere beim Einbau des NTC-Bauelements in Schaltungen, an denen eine Spannung, beispielsweise eine Gleichspannung am Bauelement anliegt, verhindert oder eingeschränkt werden.

In einer Ausgestaltung umfasst die erste Elektrode eine Schicht mit Kupfer als Hauptbestandteil. Kupfer als Elektrodenmaterial oder als Hauptbestandteil desselben bietet weiterhin den Vorteil einer hohen thermischen Leitfähigkeit, womit das Ansprechverhalten des NTC-Bauelements verbessert werden kann. Die genannte Schicht kann eine Folie, beispielsweise eine Kupferfolie sein. Durch diese Ausgestaltung kann die Bauteilhöhe des NTC-Bauelements, beispielsweise im Vergleich zu konventionellen NTC-Bauelementen gering gehalten werden, da die Schicht oder Elektrodenschicht für die erste Elektrode als Kupferfolie besonders kompakt oder dünn bereitgestellt werden kann. In einer Ausgestaltung bildet die erste Elektrode einen Stabilisierungskörper des NTC-Bauelements. Die mechanische Stabilität des NTC-Bauelements kann durch die Verwendung von duktilem Kupfer als Stabilisierungskörper vorteilhafterweise ebenfalls erhöht werden.

In einer Ausgestaltung weist die erste Elektrode eine Schicht mit einer Schichtdicke zwischen 10 µm und 100 µm auf.

In einer Ausgestaltung umfasst die NTC-Komponente eine Schicht mit einer Schichtdicke zwischen 5 µm und 100 µm.

In einer Ausgestaltung hat das Bauelement eine Bauteildicke zwischen 30 µm und 100 µm. Die Bauteildicke bezeichnet vorzugsweise die gesamte Dicke des NTC-Bauelements wie oben beschrieben, d. h. sie schließt die erste Elektrode, die NTC-Komponente und die zweite Elektrode mit ein. Weiterhin wird die genannte Bauteildicke vorzugsweise entlang der Anordnung der ersten Elektrode, der NTC-Komponente und der zweiten Elektrode oder in Stapelrichtung dieser Komponenten gemessen.

Durch die Wahl oder Dimensionierung der oben genannten Dicken kann mit Vorteil die Bauteildicke oder Bauelementdicke des NTC-Bauelements klein gehalten und/oder das NTC-Bauelement in Dünnschichtbauweise und/oder einer "low-profile"-Variante (englisch für "niedrige Form") ausgeführt werden. Insbesondere können sehr niedrige Bauformen oder kleine Bauteilhöhen realisiert werden. Weiterhin bieten die niedrigen Bauformen die Möglichkeit, die Bauelemente platzschonend unterhalb anderer Baugruppen beispielsweise auf einer Platine zu positionieren, beziehungsweise diese sogar in die Platine zu integrieren. Die niedrigen Bauformen können weiterhin eine passive Integration, "Einbettung" oder Verkapselung des NTC-Bauelements begünstigen.
In einer Ausgestaltung bestehen zumindest eine der ersten und der zweiten Elektrode zu 100 % aus Kupfer.

In einer alternativen Ausgestaltung umfasst zumindest eine der ersten und der zweiten Elektrode neben Kupfer ein Glas und/oder eines oder mehrere der folgenden Materialien: Zirkoniumoxid, insbesondere ZrO₂, Aluminiumoxid, insbesondere Al₂O₃, und Magnesiumoxid (MgO).
Durch die beiden zuletzt genannten Ausgestaltungen kann mit Vorteil auf den Einsatz von teuren Edelmetallen, beispielsweise Ag, Pd und/oder Au als Elektrodenmaterial verzichtet werden.

In einer Ausgestaltung sind zumindest eine der ersten und der zweiten Elektrode frei von Silber (Ag).

In einer Ausgestaltung ist das NTC-Bauelement oberflächenmontierbar ausgeführt. Durch diese Ausgestaltung können insbesondere die Vorteile einer oberflächenmontierbaren Ausgestaltung, beispielsweise die Möglichkeit das NTC-Bauelement direkt auf eine Leiterplatte oder elektronische Baugruppe zu löten, ausgenutzt werden. Diese Ausgestaltung ist insbesondere begründet durch die Möglichkeit, niedrige Bauformen des NTC-Bauelements zur Verfügung zu stellen vorteilhaft, da in diesem Fall ebenfalls die Bauteilhöhe der gesamten elektronischen Baugruppe ebenfalls vorteilhafterweise entsprechend gering gehalten werden kann.

Ein weiterer Aspekt der vorliegenden Anmeldung betrifft ein NTC-Bauteil umfassend eine Vielzahl von in einem Feld, beispielsweise nebeneinander, angeordneten NTC-Bauelementen. Durch diese Ausgestaltung kann beispielsweise eine Integration oder Anordnung des NTC-Bauelements in ein oder einem elektronischen Bauteil mit zusätzlichen elektronischen Komponenten vereinfacht werden, wobei eine Vielzahl von einzelnen NTC-Bauelementen vorteilhaft oder erforderlich ist. Ein weiterer Aspekt der vorliegenden Anmeldung betrifft ein Verfahren zur Herstellung des NTC-Bauelements. Das Verfahren umfasst das Verbinden der ersten Elektrode, eines beispielsweise vorher bereitgestellten Grundmaterials für die NTC-Komponente und/oder der zweiten Elektrode zu einem Verbund, wobei das Grundmaterial eines oder mehrere der Materialien Mn, Ni, Co und Cu und/oder Verbindungen daraus und Fe und/oder Verbindungen daraus umfasst.

Neben den genannten Elementen selbst können diese beispielsweise auch als Oxide oder andere Verbindungen im Grundmaterial vorliegen. Das Verfahren umfasst weiterhin einen Temperaturschritt, in dem oder wobei der Verbund einer Temperatur ausgesetzt wird, vorzugsweise einer Sintertemperatur. Bei dem Temperaturschritt ist die Temperatur derart gewählt, dass aus dem Grundmaterial die NTC-Komponente aufweisend eine wie in Anspruch 1 definierte Keramik gebildet wird und das Grundmaterial mit der ersten und der zweiten Elektrode gesintert oder versintert wird. Mit "Versintern" ist in diesem Zusammenhang vorzugsweise gemeint, dass die erste und die zweite Elektrode neben der Sinterung der NTC-Komponente auch mechanisch stabil mit dieser verbunden oder gemeinsam mit dieser gesintert werden.

Der Ausdruck "Verbund" soll vorzugsweise bedeuten, dass die genannten Komponenten vor dem Temperaturschritt oder dem Aussetzen der Temperatur in irgendeiner Art verbunden oder an- oder nebeneinander angeordnet werden, ohne dass schon ein mechanisch stabiler Zusammenhalt der Komponenten bestehen muss.

In einer Ausgestaltung des Verfahrens wird die Materialzusammensetzung des Grundmaterials vor dem Temperaturschritt derart gewählt, dass während des Temperaturschrittes stabile Oxidationsstufen oder Oxidationszustände der einzelnen Bestandteile des Grundmaterials vorliegen.

Durch die genannte Zusammensetzung, insbesondere durch den Gehalt von mindestens Fe kann die Sinterung für das NTC-Bauelement bei gleichzeitigem Erhalt der heißleitenden Eigenschaften, beispielsweise unter einer Atmosphäre mit reduziertem Sauerstoffpartialdruck, erfolgen. Der Grund dafür ist, dass durch den Zusatz der zuletzt genannten Materialien zu dem oben genannten Teil B der Keramik, welcher vorzugsweise dreiwertige Metallkationen umfasst, ein Überschuss der beispielsweise zweiwertigen Kationen, also des Teils A der Keramik, und damit ein Ausscheiden der entsprechenden Oxide der zweiwertigen Kationen, beispielsweise von Nickeloxid, verhindert werden kann. Damit kann vorteilhafterweise auch eine Degradierung oder Veränderung der elektrischen Eigenschaften der Keramik verhindert werden. Ebenfalls damit einhergehend kann der Verlust der heißleitenden Eigenschaften während des Sinterns zweckmäßigerweise verhindert werden. Mit anderen Worten sind insbesondere die intrinsischen Materialeigenschaften der einzelnen Bestandteile oder der Materialzusammensetzung des erfindungsgemäßen Grundmaterials verantwortlich für den Erhalt der heißleitenden Eigenschaften beziehungsweise die Verhinderung des genannten Überschusses während der Sinterung. Die genannten intrinsischen Materialeigenschaften beziehen sich vorzugsweise auf ein komplexes Wechselspiel zwischen chemischen Reaktionen, beispielsweise Redox-Vorgängen, mit den physikalischen Eigenschaften, insbesondere den heißleitenden elektronischen Eigenschaften der Materialzusammensetzung während des Temperaturschrittes.

In einer Ausgestaltung des Verfahrens umfasst das Grundmaterial eine körnige oder pulvrige Keramik, die vor dem Verbinden auf mittlere Partikelgrößen oder Korngrößen von weniger als 1 µm im Durchmesser gemahlen wird. Das Feinmahlen erleichtert oder ermöglicht bei der Sinterung aufgrund der im Verhältnis zur Masse des jeweiligen Keramikpartikels vergrößerten Oberfläche und Oberflächenenergie vorzugsweise die Versinterung oder Verdichtung zu einem zusammenhängenden Festkörper.

In einer Ausgestaltung des Verfahrens wird der Verbund im Falle von Kupferelektroden einer Temperatur zwischen 500°C und 1050°C, vorzugsweise zwischen 850°C und 1050°C, ausgesetzt. Die Wahl einer solchen Sintertemperatur erlaubt mit Vorteil - im Falle von Kupferelektroden - das Versintern des Grundmaterials beziehungsweise der NTC-Komponente mit der ersten und/oder der zweiten Elektrode, da Kupfer unter diesen Bedingungen noch nicht schmilzt, sondern in fester Form vorliegt. Der Einsatz der Kupferelektroden ist insbesondere vorteilhaft durch die guten elektrischen Eigenschaften und niedrigen Kosten sowie die Möglichkeit beispielsweise die erste Elektrode als Kupferfolie auszuführen, wobei diese gleichzeitig als Stabilisierungskörper für das NTC-Bauelement dienen kann.

Der Ausdruck "Kupferelektroden" bedeutet vorliegend vorzugsweise, dass die jeweilige Elektrode, also beispielsweise die erste und die zweite Elektrode, aus Kupfer bestehen oder Kupfer (Cu) als Hauptbestandteil aufweisen.

In einer Ausgestaltung des Verfahrens wird der Verbund der Temperatur unter einer Schutzgasatmosphäre mit einem Sauerstoffpartialdruck von weniger als 1 µbar ausgesetzt.
In einer Ausgestaltung des Verfahrens wird der Verbund der Temperatur mit einem Sauerstoffpartialdruck unterhalb des Gleichgewichtspartialdrucks von Kupfer-Kupferoxid (Cu/ Cu₂O) ausgesetzt.

Durch die beiden zuletzt genannten Ausgestaltungen kann zweckmäßigerweise verhindert werden, dass die erste und/oder die zweite Elektrode während des Sinterns maßgeblich oder signifikant oxidiert, wodurch die Elektroden unbrauchbar würden.

In einer Ausgestaltung des Verfahrens wird die erste Elektrode für den Verbund mittels Siebdruck, Tintenstrahldruck oder Foliengießen mit der NTC-Komponente versehen oder beschichtet. Gemäß dieser Ausgestaltung wird zweckmäßigerweise zunächst die erste Elektrode bereitgestellt und auf dieser dann die NTC-Komponente abgeschieden.

In einer Ausgestaltung wird die NTC-Komponente zur Herstellung des Verbunds strukturiert, beispielsweise in Form kleiner Quadrate in einer nicht zusammenhängenden Schicht, auf die erste Elektrode aufgebracht. Gemäß dieser Ausgestaltung wird die NTC-Komponente vorzugsweise mittels Siebdruck bereitgestellt oder aufgebracht.
In einer alternativen Ausgestaltung des Verfahrens wird die NTC-Komponente großflächig oder vollflächig mit der ersten Elektrode verbunden. Gemäß dieser Ausgestaltung wird die NTC-Komponente vorzugsweise mittels Foliengießen bereitgestellt oder auf die erste Elektrode aufgebracht.

In einer Ausgestaltung des Verfahrens wird die zweite Elektrode strukturiert.

In einer Ausgestaltung des Verfahrens wird die zweite Elektrode strukturiert mit der NTC-Komponente verbunden oder auf diese(r) aufgebracht oder abgeschieden.

In einer Ausgestaltung des Verfahrens wird das Grundmaterial vor dem Verbinden der ersten Elektrode, des Grundmaterials und der zweiten Elektrode durch Foliengießen bereitgestellt, wobei die NTC-Komponente für den Verbund mit der ersten und zweiten Elektrode beschichtet wird.

In einer Ausgestaltung des Verfahrens wird der Verbund vor dem Temperaturschritt bei einer Temperatur zwischen 300°C und 500°C entkohlt.

In einer Ausgestaltung des Verfahrens wird der Verbund nach dem Temperaturschritt mit mindestens einer weiteren Elektrode, beispielsweise weiteren Außenelektroden, versehen.

Ein Referenzbeispiel der vorliegenden Anmeldung betrifft ein Verfahren zur Herstellung eines NTC-Bauteils, welches eine Vielzahl von in einem Feld nebeneinander angeordneten NTC-Bauelementen, wie oben beschrieben, aufweist. Dabei sind die einzelnen NTC-Bauelemente zweckmäßigerweise parallel prozessiert worden, so dass sich Verfahrensschritte, welche oben für das einzelne NTC-Bauelement beschrieben sind, genauso für das NTC-Bauteil gelten können.

In einer Ausgestaltung des zuletzt beschriebenen Referenzbeispiels wird das NTC-Bauteil nach dem Aussetzen des Verbunds der Temperatur in eine Vielzahl von einzelnen NTC-Bauteilen und/oder NTC-Bauelementen vereinzelt. Das zuletzt genannte NTC-Bauteil ist dabei vorzugsweise eines, welches seinerseits eine Mehrzahl von beispielsweise in einer Reihe oder in einem Streifen angeordneten NTC-Bauelementen aufweist.

Ein weiteres Referenzbeispiel der vorliegenden Anmeldung betrifft die Verwendung des NTC-Bauelements oder des NTC-Bauteils als Temperatursensor oder als Einschaltstrombegrenzer.

Weitere Vorteile, vorteilhafte Ausgestaltungen und Zweckmäßigkeiten der Erfindung ergeben sich aus der folgenden Beschreibung der Ausführungsbeispiele in Verbindung mit den Figuren.
- Figur 1: zeigt eine schematische Schnitt- oder Seitenansicht eines NTC-Bauteils.
- Figur 2: zeigt eine schematische Aufsicht auf ein NTC-Bauteil.
- Figur 3: zeigt beispielhaft eine Widerstandskennlinie für ein NTC-Bauelement.

Gleiche, gleichartige und gleich wirkende Elemente sind in den Figuren mit gleichen Bezugszeichen versehen. Die Figuren und die Größenverhältnisse der in den Figuren dargestellten Elemente untereinander sind nicht als maßstäblich zu betrachten. Vielmehr können einzelne Elemente zur besseren Darstellbarkeit und/oder zum besseren Verständnis übertrieben groß dargestellt sein.

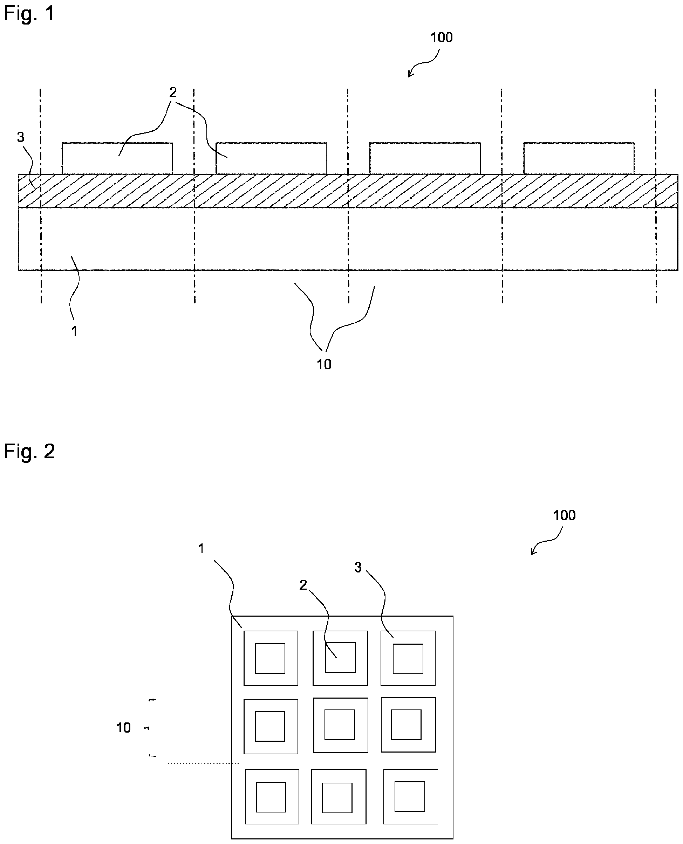

Figur 1 zeigt schematisch eine Schnitt- oder Seitenansicht eines erfindungsgemäßen NTC-Bauteils 100. Das NTC-Bauteil 100 weist eine erste Elektrode 1 auf. Die erste Elektrode 1 ist vorzugsweise durch Foliengießen bereitgestellt worden. Alternativ kann die erste Elektrode 1 durch ein anderes Verfahren, beispielsweise durch Siebdruck oder galvanisch abgeschieden oder bereitgestellt werden. Die erste Elektrode 1 ist vorzugsweise eine Schicht. Die erste Elektrode 1 ist vorzugsweise weiterhin aus Kupfer oder umfasst Kupfer als Hauptbestandteil. Vorzugsweise ist die erste Elektrode eine Kupferfolie. Alternativ kann die erste Elektrode ein anderes unedles Metall als Hauptbestandteil aufweisen. Die erste Elektrode 1 bildet vorzugsweise einen Stabilisierungskörper für das NTC-Bauteil 100.

Das NTC-Bauteil 100 weist weiterhin eine NTC-Komponente 3 auf. Die NTC-Komponente bezeichnet vorzugsweise ein heißleitendes Material oder NTC-Material. Die NTC-Komponente 3 ist in Figur 1 großflächig auf der ersten Elektrode 1 angeordnet. Alternativ kann die NTC-Komponente 3 strukturiert, also nur in bestimmten Bereichen auf die erste Elektrode 1 aufgebracht werden. Die NTC-Komponente 3 kann beispielsweise durch Siebdruck, Tintenstrahldruck beziehungsweise analog zu einem Tintenstrahldruckverfahren, oder Foliengießen auf die erste Elektrode 1 aufgebracht werden. Die NTC-Komponente 3 ist vorzugsweise eine Schicht.

Das NTC-Bauteil 100 umfasst weiterhin eine zweite Elektrode 2. In Figur 1 sind, beispielhaft für eine Mehrzahl von zweiten Elektroden 2, insgesamt vier zweite Elektroden 2 dargestellt. Die NTC-Komponente ist zweckmäßigerweise zwischen der ersten Elektrode 1 und der/den zweiten Elektroden 2 angeordnet. Die zweite Elektroden 2 wird als Schicht vorliegend vorzugsweise in einem Herstellungsschritt zur Ausbildung einer Mehrzahl von zweiten Elektroden 2, beispielsweise in quadratischer Form (vgl. Figur 2) strukturiert aufgebracht. Wenn im Folgenden auf die zweite Elektrode Bezug genommen wird, sei vorzugsweise auf jede einzelne zweite Elektrode 2 Bezug genommen.

Die zweite Elektrode 2 ist vorzugsweise galvanisch abgeschieden oder durch Siebdruck mit der NTC-Komponente 3 verbunden oder darauf aufgebracht.

Die erste und die zweite Elektrode 1, 2 enthält vorzugsweise Kupfer als Hauptbestandteil oder besteht vollständig aus Kupfer. Alternativ kann die erste und die zweite Elektrode ein anderes, beispielsweise unedles, Metall als Hauptbestandteil aufweisen. Weiterhin kann die erste und die zweite Elektrode ZrO₂, Al₂O₃ und/oder MgO enthalten. Vorzugsweise enthalten die erste Elektrode 1 und die zweite Elektrode 2 kein Silber.

Die Bauteildicke des NTC-Bauteils 100 beträgt vorzugsweise zwischen 30 µm und 100 µm. Die Dicke der NTC-Komponente beträgt vorzugsweise zwischen 5 µm und 100 µm. Die Dicke der ersten Elektrode 1 beträgt vorzugsweise zwischen 10 µm und 100 µm.

In Figur 1 ist das NTC-Bauteil 100 entweder in einem gesinterten oder ungesinterten Zustand dargestellt. Im Falle des ungesinterten Zustands ist mit dem Bezugszeichen 3 vorzugsweise ein Ausgangs- oder Grundmaterial (Grünteil) für die NTC-Komponente bezeichnet.

Im folgenden Absatz wird kurz auf die Herstellung eines NTC-Bauteils gemäß dem Stand der Technik eingegangen, demgegenüber dann die Vorteile der vorliegenden Anmeldung im Anschluss beschrieben oder verdeutlicht werden:
Eine bekannten und/oder zum Stand der Technik gehörende Keramikrezeptur oder Zusammensetzung für das Grundmaterial oder die NTC-Komponente betrifft eine Spinell-Keramik mit der allgemeinen Form oder Formel AB₂O₄, wobei A ein zweiwertiges Kation und B ein dreiwertiges Kation bezeichnet. Die Zusammensetzung umfasst beispielsweise die einzelnen Metallkationen Mn, Ni, Co, Cu, und Fe mit den jeweiligen molaren oder atomaren Anteilen: 1,6992; 0,4572; 0,2328; 0,6108 und 0 (für Fe). Für ein herkömmliches Sinterverfahren mit Sintertemperaturen von typischerweise über 1050°C kann man unter Berücksichtigung der Stabilität der einzelnen Oxidationsstufen unter Sinterung an Luft zu folgender chemischer Formel oder einer weitgehend ähnlichen Formel (welche ungefähr der folgenden entspricht) für das Material der NTC-Komponente gelangen: (Mn_{0,0508}" Ni_{0,2387}" Co_{0,0858}" Cu_{0,6755}") (Mn_{1,8284}''' Co_{0,1716}'' ' Fe₀''') O_{4,0000}. Die kleinen vertikalen Striche beziehen sich auf die jeweilige oxidative Wertigkeit. Dieses Material ist bekannt und wird verbreitet und in großen Mengen (im Tonnenmaßstab) für NTC-Bauteile bereits verwendet. Nach oder bei der konventionellen Sinterung ergibt sich ein Überschuss der 2-wertigen Kationen, so dass beispielsweise 0,2669 molare oder atomare Anteile NiO oder in etwa der genannte Anteil ausgeschieden werden oder übrig bleiben.

Erfindungsgemäß wird nach dem Verbinden der ersten Elektrode 1, des Grundmaterials für die NTC-Komponente 3 und der zweiten Elektrode 2, der entstandene Verbund für die Sinterung einer Temperatur ausgesetzt oder einem Temperaturschritt unterzogen, wobei die Temperatur derart gewählt ist, dass aus dem Grundmaterial die NTC-Komponente 3 gebildet wird und diese beziehungsweise das Grundmaterial mit der ersten und der zweiten Elektrode 1, 2 versintert wird. Die Sintertemperatur liegt zweckmäßigerweise unterhalb des Schmelzpunktes von Kupfer, so dass erfindungsgemäß die Vorteile von Kupfer als Elektrodenmaterial genutzt werden können und die Elektroden nicht schmelzen. Vor dem Sintern können die entsprechenden Grünteile in Form gepresst und zugeschnitten werden. Vorzugsweise wird der genannte Verbund zum Sintern einer Temperatur zwischen 850°C und 1050 °C ausgesetzt. Dies erfolgt unter einer Schutzgasatmosphäre vorzugsweise mit einem Sauerstoffpartialdruck von weniger als 1 µbar und unterhalb des Gleichgewichtspartialdrucks von Kupfer/Kupferoxid (Cu/Cu₂O), um eine Oxidation zu verhindern oder einzuschränken.

Wenn das oben beschriebene, bekannte Keramikmaterial erfindungsgemäß gesintert würde, würde das Problem auftreten, dass die in den Spinell-Keramiken enthaltenen Elemente Mangan und Kobalt, die in einem konstanten Verhältnis von 2- und 3-wertigen Kationen in die Keramik eingebaut werden, beispielsweise durch Reduktion vom 3-wertigen zum 2-wertigen Oxidationszustand übergehen. Damit würde die Ausbildung der erforderlichen heißleitenden Phasen oder Eigenschaften für die NTC-Komponente unterbunden, bzw. diese Phasen zerfielen während des Sinterprozesses. Als Konsequenz würde das NTC-Material beziehungsweise die NTC-Komponente hochohmig und/oder zum Isolator. Genauer gesagt, wenn man das oben genannte, bekannte Material unter reduziertem Sauerstoffpartialdruck, beispielsweise unterhalb von 1 µbar und unter niedrigeren Temperaturen, sinterte, würde sich beispielsweise die folgende Zusammensetzung oder eine weitgehend ähnliche Zusammensetzung (ungefähr diese) ergeben: (Mn_{0,7295}" Ni₀" Co_{0,1142}" Cu_{0,1563}") (Mn_{1,7716}''' Co_{0,2284}''' Fe₀''') 0_{4,0000}. Das Verhältnis von zwei- und dreiwertigen Kationen ist dabei im Vergleich zur oben genannten Formel beziehungsweise Materialzusammensetzung gestört. Nach oder bei der Sinterung ergibt sich also ein Überschuss der 2-wertigen Kationen oder deren Oxide, so dass in diesem Fall beispielsweise 0,6729 molare oder atomare Anteile NiO und 0,7428 molare oder atomare Anteile CuO oder in etwa diese Anteile ausgeschieden werden oder übrig bleiben.

Hier hat sich der Überschuss an 2-Wertigen Kationen und damit verbunden die Ausscheidung der entsprechenden Oxide - im Vergleich zur oben beschriebenen Situation - verfünffacht. Durch die Degradation weist die NTC-Komponente oder das NTC-Material einen stark erhöhten elektrischen Widerstand auf, beziehungsweise ist zum Isolator geworden unter Verlust der heißleitenden Eigenschaften. Damit ist es im Einsatz für ein NTC-Bauteil nicht mehr geeignet.

Der theoretische Befund der Reduktion von 3- zu 2-wertigen Kationen lässt sich sowohl durch Redox-Titration als auch durch eine Bestimmung des Masseverlustes des NTC-Materials unter reduziertem Sauerstoffpartialdruck quantitativ ermitteln oder bestätigen.

Um unter diesen reduzierenden Bedingungen, wie sie der erfindungsgemäße Prozess erfordert, die Ausbildung der gewünschten heißleitenden Materialphasen zu ermöglichen, wird erfindungsgemäß vorzugsweise ein Teil von Mangan und/oder Kobalt durch Eisen, dessen 3-wertige Oxidationsstufe unter Bedingungen unter denen die erste und/oder die zweite Elektrode vorzugsweise nicht maßgeblich oxidieren, stabil ist, beispielsweise redox-stabil, ist, ersetzt. Eisen liegt sowohl unter den bekannten Sinterbedingungen als auch unter den erfindungsgemäßen Bedingungen (niedrigere Temperatur und schützende Gasatmosphäre während des Sinterns) immer in 3-wertiger Form vor und kann, aufgrund des ähnlichen lonenradius mit Mangan und Kobalt, anstelle der 3-wertigen Mn- und Co-Kationen in die Spinell-Keramik eingebaut werden, ohne im erfindungsgemäßen Prozess oder Sinterverfahren signifikant chemisch reduziert zu werden und zu degradieren.

Um erfindungsgemäß für den Sinterprozess ein genügend reaktives Material zu erhalten, dass bei Temperaturen von 500°C bis 1050°C gesintert werden kann, wird das Calcinat, also die zu sinternde Probe auf Partikelgrößen von typischerweise weniger als 1 µm im mittleren Durchmesser gemahlen. Aus diesem Pulver wird danach entweder ein Folienschlicker oder eine Siebdruckpaste für die weitere Prozessierung hergestellt.

In Figur 1 weist das Grundmaterial erfindungsgemäß eines oder mehrere der Materialien Mn, Ni, Co, und Cu und/oder Verbindungen daraus und Fe und/oder Verbindungen daraus auf, so dass, wie oben beschrieben, keine Reduktion und Degradierung des Grundmaterials beziehungsweise der NTC-Komponente auftritt.

Erfindungsgemäß weist das Grundmaterial erfindungsgemäß eine Keramik mit der allgemeinen Zusammensetzung AB₂O₄ auf. A ist vorzugsweise ein 2-wertiges Kation und B ein 3-wertiges Kation.

Die Keramik ist erfindungsgemäß gemäß der Formel (Mnt Niᵤ Coᵥ Cu_{w}) (Mnₓ Co_{y} Fe_{z})₂ O₄ zusammengesetzt, mit t + u + v + w = 1 und x + y + z = 2.

Erfindungsgemäß liegt t im Bereich von 0,2 bis 0,4, u im Bereich von 0,18 bis 0,38 v im Bereich von 0 bis 0,15, w im Bereich von 0,27 bis 0,47, x im Bereich von 0,63 bis 0,83, y im Bereich von 0 bis 0,19 und z im Bereich von 1,07 bis 1,27.

Besonders bevorzugt ist t = 0,3021;
u = 0,2787; v = 0,0473; w = 0,3723; x = 0,7336; y = 0,0946 und z = 1,1716, so dass die NTC-Komponente erfindungsgemäß entsprechend der folgenden Formel zusammengesetzt ist: (Mn_{0,3021}" Ni_{0,2787}" Co_{0,0473}" Cu_{0,3723}") (Mn_{0,7336}''' Co_{0,0946}''' Fe_{1,1716}''') 0_{4,0000}.

Die NTC-Bauteil 100 kann weiterhin oberflächenmontierbar ausgeführt sein, beispielsweise in Vielschichtbauweise.

In Bezug zur Figur 1 kann statt der ersten Elektrode 1, wie oben beschrieben, auch die NTC-Komponente 3 zuerst, beispielsweise durch Foliengießen bereitgestellt werden und (für den Verbund) mit der ersten und zweiten Elektrode 1, 2 versehen werden. Für eine oberflächenmontierbare Ausgestaltung des NTC-Bauteils 100 können die Elektroden 1, 2 vorzugsweise entsprechend strukturiert sein, so dass das NTC-Bauteil beispielsweise direkt auf eine Leiterplatte oder elektronische Baugruppe gelötet werden kann.

Der Verbund kann vor dem Temperaturschritt, also dem Aussetzen des Verbunds der Temperatur bei einer Temperatur zwischen 300°C und 500°C entkohlt werden. Während des Entkohlens können beispielsweise Lösungsmittel und/oder Kohlenstoffrückstände aus dem Grünteil des Verbundes oder der NTC-Komponente ausgetrieben werden.

Nach dem Aussetzen der Temperatur kann der Verbund mit mindestens einer weiteren Elektrode, beispielsweise einer Außenelektrode, versehen werden. Dabei kann das Material der weiteren Elektrode(n) zunächst aufgebracht und anschließend zur Herstellung einer mechanischen Verbindung, beispielsweise mit dem Verbund, eingebrannt werden. Die weitere Elektrode kann weiterhin elektrisch leitfähig mit der ersten Elektrode verbunden sein.

Nach dem Versintern oder dem Temperaturschritt wird das NTC-Bauteil 100 vorzugsweise in eine Vielzahl von NTC-Bauelemente 10 vereinzelt. Dies ist in Figur 1 durch die vertikalen, gestrichelten Linien 1 angedeutet. Das Vereinzeln kann durch Sägen, Schneiden oder Stanzen oder ein anderes Verfahren erfolgen.

Figur 2 zeigt eine schematische Aufsicht auf ein beispielhaften NTC-Bauteils 100. Das NTC-Bauteil 100 weist eine Vielzahl von in einem Feld angeordneten NTC-Bauelementen 10 auf oder ist durch diese gebildet. Beispielhaft ist ein Feld von 3 X 3 NTC-Bauelementen gezeigt. Insbesondere kann die erste Elektrode 1 ein Cu-Substrat mit einer Dicke von 50 µm darstellen. Die NTC-Komponenten 3 können darauf siebgedruckt sein für die Ausbildung von quadratischen NTC-Bauelementen 10 mit einer Kantenlänge von beispielsweise 2 mm. Die zweiten Elektrode 2 können aus Kupfer und ebenfalls quadratisch (wie dargestellt) mit einer Kantenlänge von 1 mm oder rund ausgebildet sein. Die Schichtdicke oder Schichtstärke der aktive NTC-Schichten oder NTC-Komponenten 3 und der zweiten Elektrode 2 können jeweils 15 µm betragen. Die Bauteilhöhe des NTC-Bauelements kann hier 80 µm betragen. Vorzugsweise weist das NTC-Bauteil 100 eine zusammenhängende einzelne erste Elektrode 1 als Elektrodenschicht auf, die für alle gezeigten NTC-Bauelemente als erste Elektrode fungiert. Die Anzahl der zweiten Elektroden 2 entspricht der Anzahl der NTC-Bauelemente 10.

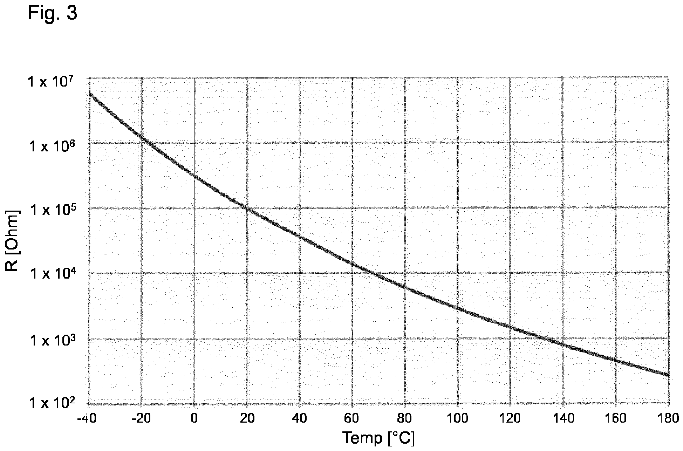

Figur 3 zeigt eine beispielhafte, temperaturabhängige Widerstandskennlinie eines NTC-Bauelements 10. Der elektrische Widerstand in Ohm ist logarithmisch über der Temperatur aufgetragen. Der dargestellte Temperaturbereich erstreckt sich von -40 bis 180 °C. Bei einer Temperatur von 25°C beträgt der elektrische Widerstand beispielsweise 70 kOhm. Der B₁₀₀-Wert (Kennliniensteilheit) beträgt oder entspricht einer Temperatur von 4800 K.

Die Erfindung ist nicht durch die Beschreibung anhand der Ausführungsbeispiele beschränkt.

### Bezugszeichenliste

- 1: Erste Elektrode
- 2: Zweite Elektrode
- 3: NTC-Komponente

- 10: NTC-Bauelement
- 100: NTC-Bauteil

## Patentansprüche

1. NTC-Bauelement (10) umfassend:
- eine erste Elektrode (1) und eine zweite Elektrode (2), und
- eine NTC-Komponente (3), die zwischen der ersten Elektrode (1) und der zweiten Elektrode (2) angeordnet ist, wobei die NTC-Komponente (3) eine Keramik mit der allgemeinen Zusammensetzung AB₂O₄ aufweist, und wobei die Keramik gemäß der Formel (Mnₜ Niᵤ Coᵥ Cu_{w}) (Mnₓ Co_{y} Fe_{z})O₄ zusammengesetzt ist,
mit t + u + v + w = 1 und x + y + z = 2, und wobei t im Bereich von 0,2 bis 0,4, u im Bereich von 0,18 bis 0,38, v im Bereich von 0 bis 0,15, w im Bereich von 0,27 bis 0,47, x im Bereich von 0,63 bis 0,83, y im Bereich von 0 bis 0,19 und z im Bereich von 1,07 bis 1,27 liegt.

2. NTC-Bauelement (10) nach Anspruch 1, wobei A ein 2-wertiges Kation und B ein 3-wertiges Kation ist.

3. NTC-Bauelement (10) nach mindestens einem der vorhergehenden Ansprüche, wobei die erste Elektrode (1) eine Schicht mit Kupfer als Hauptbestandteil umfasst.

4. NTC-Bauelement (10) nach mindestens einem der vorhergehenden Ansprüche, wobei die erste Elektrode (1) eine Schicht mit einer Schichtdicke zwischen 10 µm und 100 µm aufweist.

5. NTC-Bauelement (10) nach mindestens einem der vorhergehenden Ansprüche, welches eine Bauteildicke zwischen 30 µm und 100 µm hat.

6. NTC-Bauelement (10) nach mindestens einem der vorhergehenden Ansprüche, wobei zumindest eine der ersten und der zweiten Elektrode (1, 2) neben Cu ein Glas und eines oder mehrere der folgenden Materialien umfasst: Zirkoniumoxid, Aluminiumoxid, Magnesiumoxid.

7. NTC-Bauelement (10) nach mindestens einem der vorhergehenden Ansprüche, welches oberflächenmontierbar ausgeführt ist.

8. Verfahren zur Herstellung eines NTC-Bauelements (10) umfassend die folgenden Schritte:
- Verbinden einer ersten Elektrode (1), eines Grundmaterials und einer zweiten Elektrode (2) zu einem Verbund, wobei das Grundmaterial eines oder mehrere der Materialien Mn, Ni, Co, und Cu und/oder Verbindungen daraus und Fe und/oder Verbindungen daraus umfasst, und
- Temperaturschritt, bei dem die Temperatur derart gewählt ist, dass aus dem Grundmaterial eine NTC-Komponente (3) aufweisend eine wie in Anspruch 1 definierte Keramik gebildet wird und das Grundmaterial mit zumindest einer der ersten und der zweiten Elektrode (1, 2) versintert wird, wobei zunächst die erste Elektrode bereitgestellt wird und dann die NTC-Komponente (3) zur Herstellung des Verbunds strukturiert mittels Siebdruck auf die erste Elektrode aufgebracht wird.

9. Verfahren nach Anspruch 8, wobei das Grundmaterial eine körnige oder pulverige Keramik umfasst, die vor dem Verbinden auf mittlere Partikelgrößen von weniger als 1 µm im Durchmesser gemahlen wird.

10. Verfahren nach Anspruch 8 oder 9, wobei der Verbund im Falle von Kupferelektroden während des Temperaturschritts einer Temperatur zwischen 850°C und 1050°C und unter einer Schutzgasatmosphäre mit einem Sauerstoffpartialdruck von weniger als 1 µbar und unterhalb des Gleichgewichtspartialdrucks von Cu/Cu₂O ausgesetzt wird.

11. Verfahren nach mindestens einem der Ansprüche 8 bis 10, wobei der Verbund vor dem Temperaturschritt bei einer Temperatur zwischen 300°C und 500°C entkohlt wird.

## Claims

1. NTC component (10) comprising:
- a first electrode (1) and a second electrode (2), and
- an NTC element (3) disposed between the first electrode (1) and the second electrode (2), wherein the NTC element (3) comprises a ceramic having the general composition AB₂O₄, and wherein the composition of the ceramic is in accordance with the formula (Mnt Niᵤ Coᵥ Cu_{w}) (Mnₓ Co_{y} F_{ez})₂ O₄
with t + u + v + w = 1 and x + y + z = 2, and where t is in the range from 0.2 to 0.4, u is in the range from 0.18 to 0.38, v is in the range from 0 to 0.15, w is in the range from 0.27 to 0.47, x is in the range from 0.63 to 0.83, y is in the range from 0 to 0.19 and z is in the range from 1.07 to 1.27.

2. NTC component (10) according to Claim 1, wherein A is a divalent cation and B a trivalent cation.

3. NTC component (10) according to at least one of the preceding claims, wherein the first electrode (1) comprises a layer having copper as the main constituent.

4. NTC component (10) according to at least one of the preceding claims, wherein the first electrode (1) has a layer having a layer thickness between 10 µm and 100 µm.

5. NTC component (10) according to at least one of the preceding claims, having an assembly thickness between 30 µm and 100 µm.

6. NTC component (10) according to at least one of the preceding claims, wherein at least one of the first and second electrodes (1, 2) comprises, as well as Cu, a glass and one or more of the following materials: zirconium oxide, aluminum oxide, magnesium oxide.

7. NTC component (10) according to at least one of the preceding claims, having a surface-mountable design.

8. Process for producing an NTC component (10), comprising the following steps:
- bonding a first electrode (1), a base material and a second electrode (2) to give a composite, the base material comprising one or more of the materials Mn, Ni, Co and Cu and/or compounds thereof and Fe, and/or compounds thereof, and
- temperature step in which the temperature is selected such that an NTC element (3) comprising a ceramic as defined in Claim 1 is formed from the base material and the base material is sintered to at least one of the first and second electrodes (1, 2), wherein the first electrode is first provided and then the NTC element (3), for production of the composite, is applied in structured form to the first electrode by means of screen printing.

9. Process according to Claim 8, wherein the base material comprises a particulate or pulverulent ceramic which is ground prior to the bonding to mean particle sizes of less than 1 µm in diameter.

10. Process according to Claim 8 or 9, wherein the composite in the case of copper electrodes, during the temperature step, is subjected to a temperature between 850°C and 1050°C and under a protective gas atmosphere having a partial oxygen pressure of less than 1 µbar and below the partial equilibrium pressure of Cu/Cu₂O.

11. Process according to at least one of Claims 8 to 10, wherein the composite is decarburized at a temperature between 300°C and 500°C prior to the temperature step.

## Revendications

1. Composant NTC (10) comprenant :
- une première électrode (1) et une deuxième électrode (2), et
- un composant NTC (3) disposé entre la première électrode (1) et la deuxième électrode (2), le composant NTC (3) comportant une céramique ayant la composition générale AB₂O₄ et la céramique étant composée selon la formule (Mnₜ Niᵤ Coᵥ Cu_{w}) (Mnₓ Co_{y} Fe_{z})O₄,
avec t + u + v + w = 1 et x + y + z = 2, et t étant dans la gamme de 0,2 à 0,4, u étant dans la gamme de 0,18 à 0,38, v étant dans la gamme de 0 à 0,15, w étant dans la gamme de 0,27 à 0,47, x étant dans la gamme de 0,63 à 0,83, y dans la gamme de 0 à 0,19 et z dans la gamme de 1,07 à 1,27.

2. Composant NTC (10) selon la revendication 1, A étant un cation divalent et B étant un cation trivalent.

3. Composant NTC (10) selon l'une au moins des revendications précédentes, la première électrode (1) comprenant une couche de cuivre comme composant principal.

4. Composant NTC (10) selon l'une au moins des revendications précédentes, la première électrode (1) comportant une couche dont l'épaisseur est comprise entre 10 µm et 100 µm.

5. Composant NTC (10) selon l'une au moins des revendications précédentes, lequel a une épaisseur comprise entre 30 µm et 100 µm.

6. Composant NTC (10) selon l'une au moins des revendications précédentes, l'une au moins des première et deuxième électrodes (1, 2) comportant, outre Cu, un verre et au moins un matériau suivant : la zircone, l'alumine, la magnésie.

7. Composant NTC (10) selon l'une au moins des revendications précédentes, lequel est conçu pour pouvoir être monté en surface.

8. Procédé de fabrication d'un composant NTC (10), le procédé comprenant les étapes suivantes :
- une étape de liaison d'une première électrode (1), d'un matériau de base et d'une deuxième électrode (2) pour former un composite, le matériau de base comportant au moins un élément parmi Mn, Ni, Co et Cu et/ou des composés de ceux-ci et Fe et/ou des composés de ceux-ci et
- une étape de température dans laquelle la température est choisie de telle sorte qu'un composant NTC (3) comportant une céramique telle que définie dans la revendication 1 soit formé à partir du matériau de base et que le matériau de base soit fritté avec au moins une des première et deuxième électrodes (1, 2), la première électrode étant réalisée en premier, puis le composant NTC (3) étant appliqué par sérigraphie sur la première électrode de manière structurée pour produire le composite.

9. Procédé selon la revendication 8, le matériau de base comprenant une céramique granulaire ou pulvérulente qui est broyée, avant l'étape de liaison, à des tailles de particules moyennes de moins de 1 µm de diamètre.

10. Procédé selon la revendication 8 ou 9, le composite est exposé, dans le cas d'électrodes en cuivre, pendant l'étape de température, à une température comprise entre 850 °C et 1050 °C et sous une atmosphère de gaz protecteur à une pression partielle d'oxygène inférieure à 1 µbar et inférieure à la pression partielle d'équilibre de Cu/Cu₂O.

11. Procédé selon l'une au moins des revendications 8 à 10, le composite étant décarburé avant l'étape de température à une température comprise entre 300 °C et 500 °C.
